# EUROPEAN PATENT APPLICATION

(11) **EP 2 650 797 A2**
(43) Date of publication of application: **16.10.2013**
(21) Application number: 13160488.6
(22) Date of filing: 21.03.2013
(51) Int. Cl.: G06F 17/24

(54) **Electronic device and method for annotating data**

(30) Priority: 13.04.2012 KR 20120038236
(71) Applicant: Samsung Electronics Co., Ltd, Gyeonggi-do 443-742 (KR)
(72) Inventor: Mok, Ji-Eun, Gyeonggi-do (KR); Kwak, Byoung-Hon, Seoul (KR)
(74) Representative: Gover, Richard Paul

(57) **Abstract**

An electronic device and a method for inputting and managing user data are provided. The method for operating an electronic device includes receiving an input of at least one of a highlight mark and a drawing mark to at least one portion of electronic contents, and displaying the at least one input mark together with the electronic contents.

## Description

### BACKGROUND OF THE INVENTION

### 1. Field of the Invention:

The present invention relates to a method for inputting and managing data in an electronic device. More particularly, the present invention relates to a method for displaying user data, such as highlight marks and drawing marks, on electronic contents and for storing the user data together with the electronic contents.

### 2. Description of the Related Art:

With the development of functions of electronic devices, a user can store various electronic contents in one electronic device and display the stored contents at desired times and places, thus improving user convenience. For example, without the need to separately carry novel books, poem books, educational books, and the like, the user can store them in one electronic device in the form of electronic contents and read them whenever necessary. Accordingly, what is proposed is a scheme for drawing lines on electronic contents in addition to simply reading the electronic contents in order to meet a user's preferences.

However, technologies of the related art propose only a scheme for simply drawing lines on electronic contents, and there is a problem in that original data are damaged when the drawn lines are stored together with the electronic contents. In addition, there is a problem in that, when the stored data are called and re-read, the called data are damaged when a size of the original contents does not match in the reading.

Therefore, a need exists for a scheme that enables users to make importance marks, such as asterisks, on electronic contents in addition to simply drawing lines on the electronic contents, and to easily manage original data even when stored data are called.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide a device and a method for displaying user data, such as highlight marks and drawing marks, on electronic contents and for storing the user data together with the electronic contents.

Another aspect of the present invention is to provide a device and a method for displaying stored user data on an object-by-object basis to enable users to easily delete each object and take a shortcut to a specific object, thus improving user convenience.

In accordance with one aspect of the present invention, a method for operating an electronic device is provided. The method includes receiving an input of at least one of a highlight mark and a drawing mark to at least one portion of electronic contents, and storing the at least one input mark together with the electronic contents.

The method includes further includes receiving a selection of at least one stored electronic contents receiving an input of an instruction for executing the selected electronic contents and displaying the electronic contents executed upon receiving the input of the instruction.

The receiving of the input of the highlight mark comprises receiving a selection of a specific text among texts of the electronic contents and highlighting the selected text by at least one of a color, a shade, an underline, a slope, and a thickness while receiving the selection of the specific text.

The method includes further includes receiving a selection of a second text unhighlighted starting from an end of a first text highlighted highlighting the selected second text by at least one of a color, a shade, an underline, a slope, and a thickness while receiving the selection of the second text and connecting the first text and the second text.

The method includes further includes detecting that a portion of the highlighted first text is dragged to a third text and a fourth text and detecting that the first text is divided into the third text and the fourth text.

The receiving of the input of the highlight mark comprises receiving a selection of a specific image among images of the electronic contents and highlighting a border of the selected image.

The receiving of the input of the highlight mark comprises receiving a selection of a specific moving image among moving images of the electronic contents and highlighting a border of a video player including the selected moving image.

The highlighting of the border of the video player including the selected moving image comprises displaying the selected moving image receiving a selection of a section of the displayed moving image extracting the selected section and storing the extracted section of the moving image.

The receiving of the input of the drawing mark comprises receiving an input of at least one of a line, a figure, a picture, and a character to at least one of a text and an image of the electronic contents.

The receiving of the input of the drawing mark comprises analyzing the input coordinates and storing the input move path.

The method includes further includes generating a highlight list by storing the input highlight mark together with the electronic contents.

The method includes further includes receiving an input of an instruction for calling the highlight list calling the stored highlight list and displaying the highlight list.

The highlight list is displayed with respective identifying highlighted texts.

The method includes further includes receiving a selection of at least one highlighted text displayed in the highlight list receiving an input of an instruction for deleting the at least one selected highlighted text and deleting the at least one highlighted text receiving the input of the instruction.

The method includes further includes receiving a selection of any highlighted text displayed in the highlight list receiving an input of an instruction for moving to a page including the selected highlighted text and moving to the page including the highlighted text.

The method includes further includes generating a drawing list by storing the input drawing mark together with the electronic contents.

The method includes further includes receiving an input of an instruction for calling the drawing list calling the stored drawing list and displaying the drawing list.

The drawing list is displayed while at least one portion of a text and an image of the electronic contents with at least one of a line, a figure, a picture, and a character input is identified.

The method includes further includes receiving a selection of at least one portion of a text and an image of the electronic contents with at least one of a line, a figure, a picture, and a character input, which is displayed in the drawing list receiving an input of an instruction for deleting the at least one portion and deleting the at least one portion receiving the input of the instruction.

The method includes further includes receiving a selection of at least one portion of a text and an image of the electronic contents with at least one of a line, a figure, a picture, and a character input, which is displayed in the drawing list receiving an input of an instruction for moving to a page including the selected portion and moving to the page including the selected portion.

In accordance with another aspect of the present invention, an electronic device is provided. The electronic device includes a touchscreen for receiving an input of at least one of a highlight mark and a drawing mark to at least one portion of electronic contents, and a memory unit for storing the at least one input mark together with the electronic contents.

The touchscreen receives a selection of at least one stored electronic contents, receives an input of an instruction for executing the selected electronic contents, and displays the electronic contents executed upon receiving the input of the instruction.

The touchscreen receives a selection of a specific text among texts of the electronic contents, and wherein the electronic device further comprises a processor unit for highlighting the selected text by at least one of a color, a shade, an underline, a slope, and a thickness while receiving the selection of the specific text.

The touchscreen receives a selection of a second text unhighlighted starting from an end of a first text highlighted, and wherein the processor unit highlights the selected second text by at least one of a color, a shade, an underline, a slope, and a thickness while receiving the selection of the second text, and connects the first text and the second text.

The processor unit detects that a portion of the highlighted first text is dragged to a third text and a fourth text, and detects that the first text is divided into the third text and the fourth text.

The touchscreen receives a selection of a specific image among images of the electronic contents, and wherein the electronic device further comprises a processor unit for highlighting a border of the selected image.

The touchscreen receives a selection of a specific moving image among moving images of the electronic contents, and wherein the electronic device further comprises a processor unit for highlighting a border of a video player including the selected moving image.

The touchscreen displays the selected moving image and receives a selection of a section of the displayed moving image, and wherein the electronic device further comprises a processor unit for extracting the selected section and a memory unit for storing the extracted section of the moving image.

The touchscreen receives an input of at least one of a line, a figure, a picture, and a character to at least one of a text and an image of the electronic contents.

The electronic device includes further includes a processor unit for analyzing the input coordinates and a memory unit for storing the input move path.

The memory unit generates a highlight list by storing the input highlight mark together with the electronic contents.

The electronic device includes further includes a touchscreen for receiving an input of an instruction for calling the highlight list, and for displaying the highlight list, wherein the memory unit calls the stored highlight list.

The highlight list is displayed with respective identifying highlighted texts.

The electronic device includes further includes a touchscreen for receiving a selection of at least one highlighted text displayed in the highlight list, and for receiving an input of an instruction for deleting the at least one selected highlighted text and a processor unit for deleting the at least one highlighted text receiving the input of the instruction.

The electronic device includes further includes a touchscreen for receiving a selection of any highlighted text displayed in the highlight list, and for receiving an input of an instruction for moving to a page including the selected highlighted text; and a processor unit for moving to the page including the highlighted text.

The memory unit generates a drawing list by storing the input drawing mark together with the electronic contents.

The electronic device includes further includes a touchscreen for receiving an input of an instruction for calling the drawing list, and for displaying the drawing list, wherein the memory unit calls the stored drawing list.

The drawing list is displayed while at least one portion of a text and an image of the electronic contents with at least one of a line, a figure, a picture, and a character input is identified.

The electronic device includes further includes a touchscreen for receiving a selection of at least one portion of a text and an image of the electronic contents with at least one of a line, a figure, a picture, and a character input, which is displayed in the drawing list, and for receiving an input of an instruction for deleting the at least one portion and a processor unit for deleting the at least one portion receiving the input of the instruction.

The electronic device includes further includes a touchscreen for receiving a selection of at least one portion of a text and an image of the electronic contents with at least one of a line, a figure, a picture, and a character input, which is displayed in the drawing list, and for receiving an input of an instruction for moving to a page including the selected portion and a processor unit for moving to the page including the selected portion.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a diagram illustrating inputting of user data according to an exemplary embodiment of the present invention;

FIGs. 2A through 2C are diagrams illustrating marking of a highlight and connecting a highlight mark according to an exemplary embodiment of the present invention;

FIG. 3 is a diagram illustrating dividing of a text to which a highlight function has been applied according to an exemplary embodiment of the present invention;

FIGs. 4A through 4C are diagrams illustrating applying of a highlight function to a specific image according to an exemplary embodiment of the present invention;

FIGs. 5A and 5B are diagrams illustrating applying of a drawing function according to an exemplary embodiment of the present invention;

FIGs. 6A and 6B are diagrams illustrating enlarging of a specific portion to which a drawing function has been applied according to an exemplary embodiment of the present invention;

FIGs. 7A and 7B are diagrams illustrating a highlight list and a drawing list according to an exemplary embodiment of the present invention;

FIG. 8 is a diagram illustrating deletion of specific contents to which a highlight function has been applied by using a highlight list according to an exemplary embodiment of the present invention;

FIGs. 9A through 9D are diagrams illustrating restoring of a user-defined value for display when stored user data are called according to an exemplary embodiment of the present invention;

FIGs. 10A through 10D are diagrams illustrating deleting a stored drawing mark separately according to an exemplary embodiment of the present invention;

FIG. 11 is a flowchart illustrating an operation of an electronic device for inputting and managing user data according to an exemplary embodiment of the present invention; and

FIG. 12 is a block diagram illustrating a configuration of an electronic device according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Exemplary embodiments of the present invention provide an electronic device and a method for inputting and managing user data.

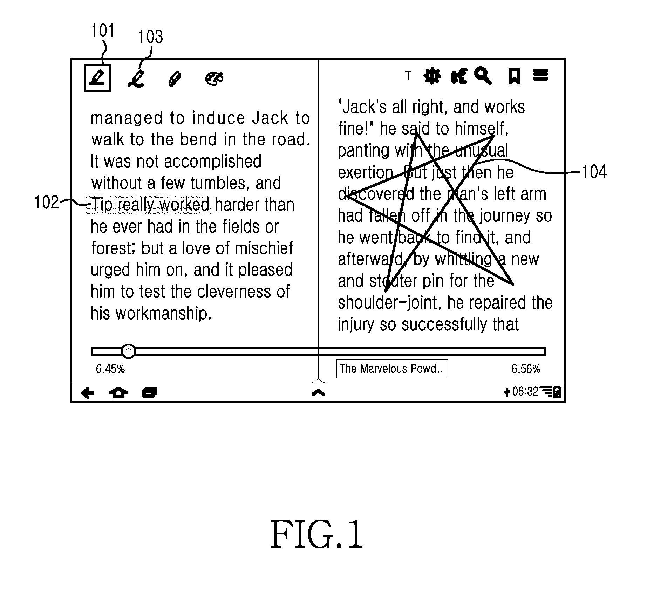

FIGs. 1 through 12, discussed below, and the various exemplary embodiments used to describe the principles of the present disclosure in this patent document are by way of illustration only and should not be construed in any way that would limit the scope of the disclosure. Those skilled in the art will understand that the principles of the present disclosure may be implemented in any suitably arranged communications system. The terms used to describe various embodiments are exemplary. It should be understood that these are provided to merely aid the understanding of the description, and that their use and definitions in no way limit the scope of the invention. Terms first, second, and the like are used to differentiate between objects having the same terminology and are in no way intended to represent a chronological order, unless where explicitly stated otherwise. A set is defined as a non-empty set including at least one element.

FIG. 1 is a diagram illustrating inputting of user data according to an exemplary embodiment of the present invention.

First, in exemplary embodiments of the present invention, the term "user data" is defined as including a highlight mark and a drawing mark. Herein, the highlight mark is defined as a function of, when a specific text is selected by a user among texts of electronic contents displayed in an electronic device, highlighting the selected text by at least one of a color, a shade, an underline, a slope, a thickness, and the like, while receiving a selection of the specific text. More specifically, it is defined as a function of selecting and highlighting a desired specific text to be highlighted by the user while displaying and reading specific electronic contents in the electronic device.

For example, while reading educational electronic contents stored in the electronic device, when the user desires to re-read a portion of the electronic contents in a highlighted manner, the user can select and highlight the portion. Therefore, the user can re-read the highlighted portion in a focused manner without the need to re-read the entire electronic contents, thus making it possible to improve the user's learning efficiency. In addition, a drawing function is defined as a function of inputting at least one of a line, a figure, a picture, and a character to at least one of a text and an image of electronic contents displayed in the electronic device. More specifically, it is defined as a function of selecting and highlighting a desired specific text or an image by the user while displaying and reading specific electronic contents in the electronic device. For example, when finding a favorite text while reading a specific novel stored in the electronic device, the user can make a mark, such as an asterisk, at the favorite text and re-read only the marked text, thus making it possible to save the user's time.

Referring to FIG. 1, the user displays specific electronic contents, which the user desires to read, among electronic contents stored in the electronic device. When finding a desired text to be highlighted while reading selected electronic contents in the electronic device, the user can make a highlight mark at a relevant portion. More specifically, the user can select a highlight icon 101 located at a left top of a touchscreen of the electronic device, and select and designate a desired text to be highlighted. Accordingly, when finding a desired text to be highlighted while reading electronic contents, the user selects the highlight icon 101 located at the left top of the touchscreen of the electronic device. Thereafter, when the user selects the desired text "Tip really worked" 102, a relevant portion is selected and highlighted by at least one of a color, a shade, an underline, a slope, a thickness, and the like. For example, the text "Tip really worked" 102 selected by the user is highlighted by at least one of a color, a shade, an underline, a slope, a thickness, and the like. Therefore, the highlighted portion "Tip really worked" 102 is easily found when being re-read by the user, thus improving user convenience.

When finding a desired text or an image to be highlighted while reading selected electronic contents in the electronic device, the user can make a desired drawing mark at a relevant portion. More specifically, the user can select a drawing icon 103 located at the left top of the touchscreen of the electronic device, and make a desired drawing mark at the relevant portion. Accordingly, when finding a desired text or an image to be highlighted while reading electronic contents, the user selects the drawing icon 103 located at the left top of the touchscreen of the electronic device. Thereafter, the user can highlight or specify a desired page by making an asterisk mark 104 at the entire page. Therefore, the highlighted or specified page is easily found by the user when being re-read by the user, thus improving user convenience. While the method of the related art simply underlines electronic contents, exemplary embodiments of the present invention enable the user to mark various characters and shapes in addition to a simple underline in order to meet a user's preferences. For example, while reading educational contents, the user can make an asterisk mark at the most important text among important portions, make a triangle mark at the second-most important portion, and make a circle mark at the third-most important portion, thus making it possible to meet a user's preferences.

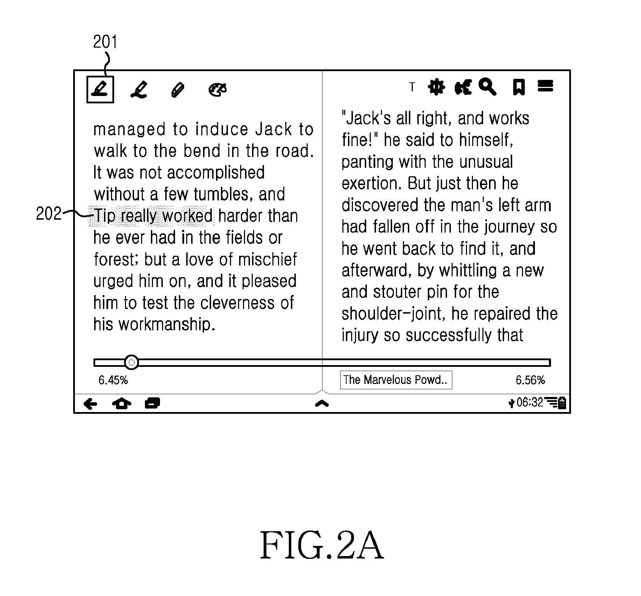

FIGs. 2A through 2C are diagrams illustrating marking of a highlight and connecting a highlight mark according to an exemplary embodiment of the present invention.

Referring to FIGs. 2A through 2C, first, it is assumed that the user finds a desired text to be highlighted while reading specific contents stored in the electronic device. When finding desired specific contents to be highlighted among electronic contents, the user selects a highlight icon 201 displayed at the left top of the electronic device. Thereafter, when the user designates a desired text "Tip really worked" 202 to be highlighted, a relevant portion is automatically highlighted through a highlight function. More specifically, the text "Tip really worked" 202 selected by the user is highlighted by at least one of a color, a shade, an underline, a slope, a thickness, and the like. Therefore, the highlighted "Tip really worked" portion 202 is easily found by the user when being re-read by the user, thus improving user convenience.

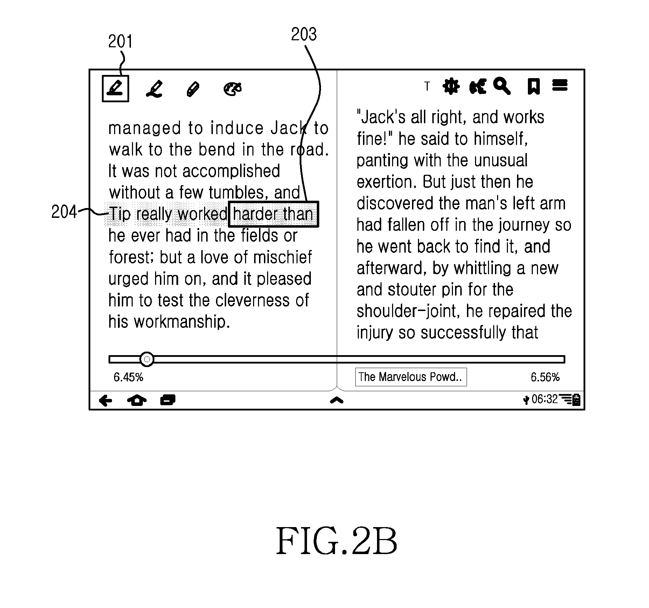

The method of the related art selects a specific text of electronic contents and highlights the text by an underline or the like, but cannot connect the highlighted text. For example, since the method of the related art selects and highlights a certain text but does not provide a function of connecting a relevant portion, the user is inconvenienced by having to designate and select a desired text to be highlighted again from the beginning. However, an exemplary method of the present invention can delete a stored text to which the highlight function is applied, and select and connect a highlight function after the text to which the highlight function has already been applied, without the need to select the entire text again from the beginning and apply the highlight function. In an example illustrated in FIG. 2B, first, the "Tip really worked" portion 204 stored in the electronic device is a text to which the highlight function has been applied by the user. Thereafter, when the user desires to also apply the highlight function to a "harder than" portion 203, the user selects the highlight icon 201, and selects and designates the "harder than" portion 203 after the "Tip really worked" portion 204, a "Tip really worked harder than" portion 204 is stored as a text to which the highlight function has been applied. Therefore, the user can connect the text to which the highlight function has been applied, thus improving user convenience.

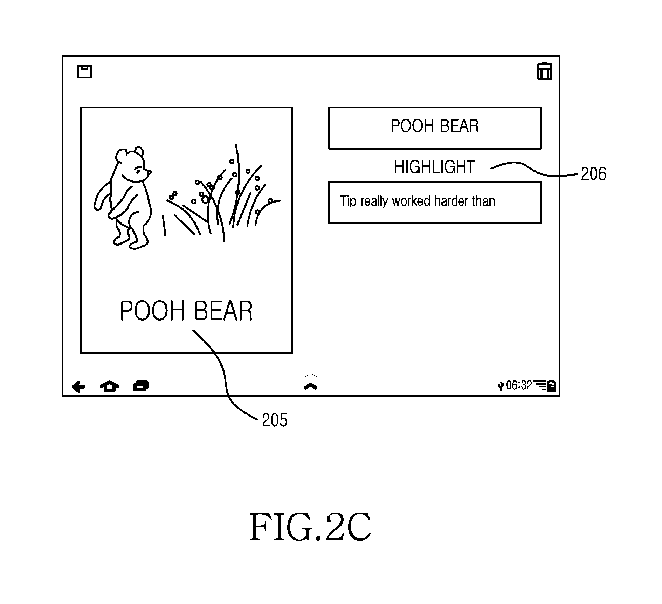

FIG. 2C is a diagram illustrating a highlight list by which a text to which a highlight function has been applied can be visibly found. As illustrated in FIG. 2C, a mark 205 is displayed on the left page of the touchscreen of the electronic device together with a title of electronic contents selected by the user, and a highlight list 206 representing a text, to which the highlight function has been applied by the user, and a page including the text, is displayed on the right page. Therefore, the user can easily find the text included in the highlight list, to which the highlight function has been applied, and the page including the text.

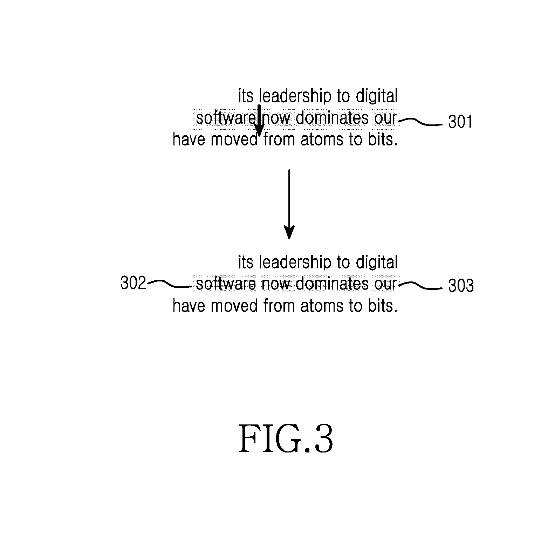

FIG. 3 is a diagram illustrating dividing of a text to which a highlight function has been applied according to an exemplary embodiment of the present invention.

Referring to FIG. 3, first, it is assumed that the user applies a highlight function to a specific text and desires to divide the text to which the highlight function has been applied. For example, the user applies the highlight function to a "software now dominates our" portion 301 among a text "its leadership to digital software now dominates our have moved from atoms to bits" and desires to divide the text, to which the highlight function has been applied, into a "software" portion 302 and a "now dominates our" portion 303. In this case, when the user selects a highlight icon and divides the portion to be divided from the "software now dominates our" portion 301, to which the highlight function has been applied, by an input tool or the like, the "software" portion 302 and the "now dominates our" portion 303 are automatically divided therefrom and stored therein. For example, since the method of the related art does not provide a function of dividing a portion highlighted by the user, the user is inconvenienced by having to de-highlight the highlighted specific text and highlight each text again by an underline or the like. However, the highlight function according to an exemplary embodiment of the present invention provides a function for dividing the specific text to which the highlight function has been applied, thus improving user convenience.

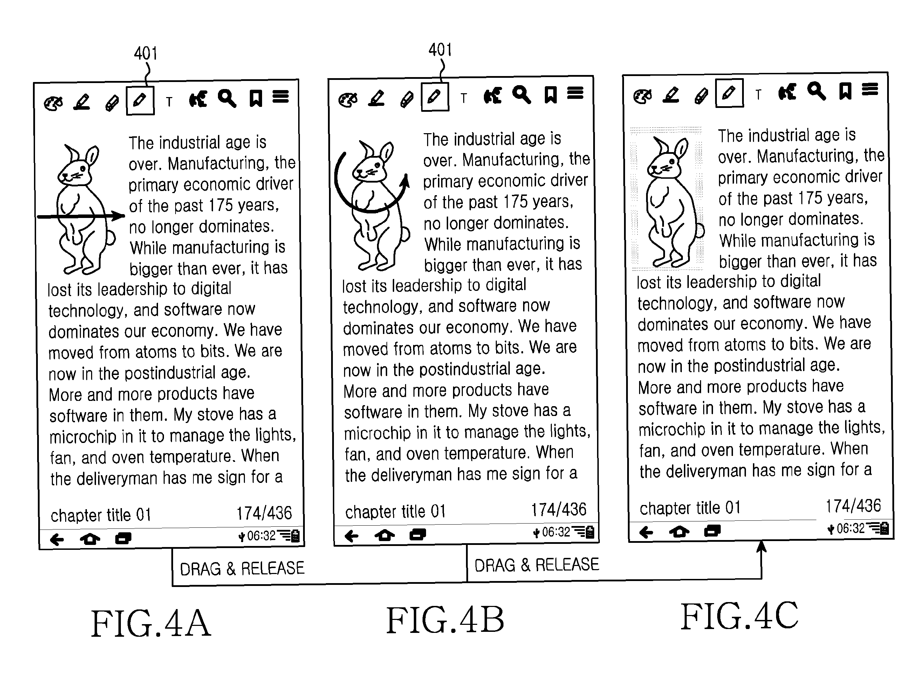

FIGs. 4A through 4C are diagrams illustrating applying of a highlight function to a specific image according to an exemplary embodiment of the present invention.

Referring to FIGs. 4A through 4C, specific electronic contents selected by the user are displayed on the touchscreen of the electronic device. When the user desires to highlight a specific image while reading electronic contents displayed on the touchscreen of the electronic device, the user can select and highlight the specific image.

In an example illustrated in FIG. 4A, when the user desires to highlight a rabbit image included in electronic contents while reading a specific novel, the user can highlight the rabbit image by selecting a highlight icon 401 displayed at the left top of the touchscreen of the electronic device. More specifically, first, the user can select the highlight icon 401 displayed at the left top of the touchscreen of the electronic device, and highlight the rabbit image by selecting the entire rabbit image by an input tool or the like.

As illustrated in FIG. 4B, since the image selected by the user is one image, the entire image is highlighted even when only a portion of the image is selected by the user. As illustrated in FIG. 4C, since a border of the image selected by the user is highlighted, the user can easily find that the image has been highlighted.

In an exemplary embodiment of the present invention, a specific moving image included in electronic contents can be selected and stored. Although not illustrated in FIGs. 4A through 4C, the entire specific moving image included in the electronic contents may be selected and stored, or only a portion of the specific moving image may be selected and stored. For example, the user may select and store a portion of at least one moving image included in electronic contents by using the electronic device. For example, after displaying a specific moving image, when the user desires to select a portion of the displayed moving image, after touching a start portion of the relevant portion by an input tool or the like, when stopping the touch at the end of the relevant portion, a portion from the start of the touch to the end of the touch is selected. Thereafter, the electronic device extracts and stores only the selected portion, and highlights a border of a relevant video player in order to indicate that the relevant moving image has been highlighted. Therefore, when re-reading the relevant page, by seeing that the border of the specific video player has been highlighted, the user can easily find that the highlight function has been applied to an entire or a portion of the relevant moving image.

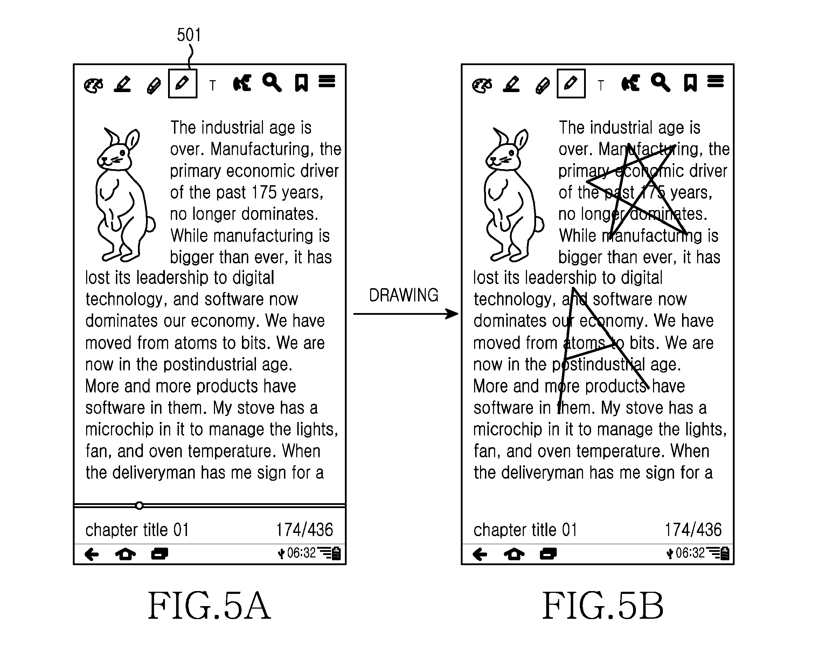

FIGs. 5A and 5B are diagrams illustrating applying of a drawing function according to an exemplary embodiment of the present invention.

Referring to FIGs. 5A and 5B, it is assumed that the user selects specific electronic contents stored in the electronic device, and reads the electronic contents displayed on the touchscreen of the electronic device. Thereafter, when the user desires to make a desired specific mark other than a simple underline at a specific portion, the user can apply the drawing function. In an example illustrated in FIG. 5B, when the user desires to make a desired mark other than an underline at a "the primary economic driver of the past 175 years" portion prior to storage while reading a text displayed on the touchscreen of the electronic device, the user can select a drawing icon 501 and make an asterisk mark at a relevant portion prior to storage. In addition, a lower text may be marked with an alphabet "A" other than an asterisk for identification prior to storage.

The method of the related art provides only a simple highlight function for drawing a simple underline or the like at a specific text of electronic contents. However, exemplary embodiments of the present invention provide a user with various marks in addition to a simple underline mark, thus making it possible to differentiate between marks based on their importance and also meet a user's preferences. For example, in order to meet a user's preferences, exemplary embodiments of the present invention enable the user to make desired marks of various characters, shapes, or the like, in addition to a simple underline mark. For example, while reading educational contents, the user can make an asterisk mark at the most important text among important portions, make a triangle mark at the second-most important portion, and make a circle mark at the third-most important portion, thus making it possible to meet a user's preferences.

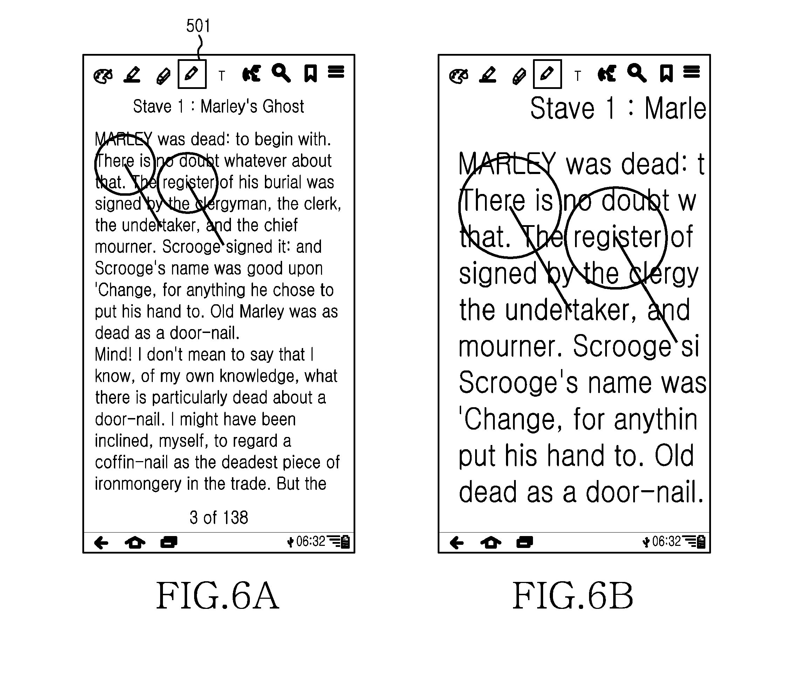

FIGs. 6A and 6B are diagrams illustrating enlarging of a specific portion to which a drawing function has been applied according to an exemplary embodiment of the present invention. Herein, the drawing function is defined as a function of inputting at least one of a line, a figure, a picture, and a character to at least one of a text and an image of electronic contents displayed in the electronic device. More specifically, it is defined as a function of selecting and highlighting a desired specific text or an image by the user while displaying and reading specific electronic contents in the electronic device. For example, when finding a favorite text while reading a specific novel stored in the electronic device, the user can make a mark, such as an asterisk, at the favorite text and re-read only the marked text, thus making it possible to save the user's time.

Referring to FIGs. 6A and 6B, the drawing function uses a vector scheme that stores a user input with a move path and a pointer of coordinates on the touchscreen of the electronic device. More specifically, when the electronic device receives an input of a specific mark by applying the drawing function from the user, the electronic device uses a vector scheme that analyzes the coordinates input from the user and stores the input move path. For example, in the method of the related art, when user data input by the user are stored together with electronic contents and the stored contents are again called and displayed on the touchscreen of the electronic device, the stored user data are broken. For example, when user data are stored with a font size of 10 in electronic contents and the electronic contents stored in the electronic device are displayed in a font size of 12 for reading, the stored user data are damaged due to a mismatch between the font sizes.

In addition, when the contents with the user data stored therein are enlarged or reduced, the relevant portion is also damaged. However, as described above, when receiving an input of user data from the user, exemplary embodiments of the present invention store a user input by a vector scheme that stores the user input with a move path and a pointer of coordinates on the touchscreen of the electronic device. Therefore, as in the method of the related art, the stored user data are restored to the original form when the stored contents are read in the future. In addition, when a circle mark input is received from the user and is stored together with electronic contents as illustrated in FIG. 6A, even when the relevant portion is thereafter enlarged by the user, the stored circle portion is displayed clearly without damage as illustrated in FIG. 6B.

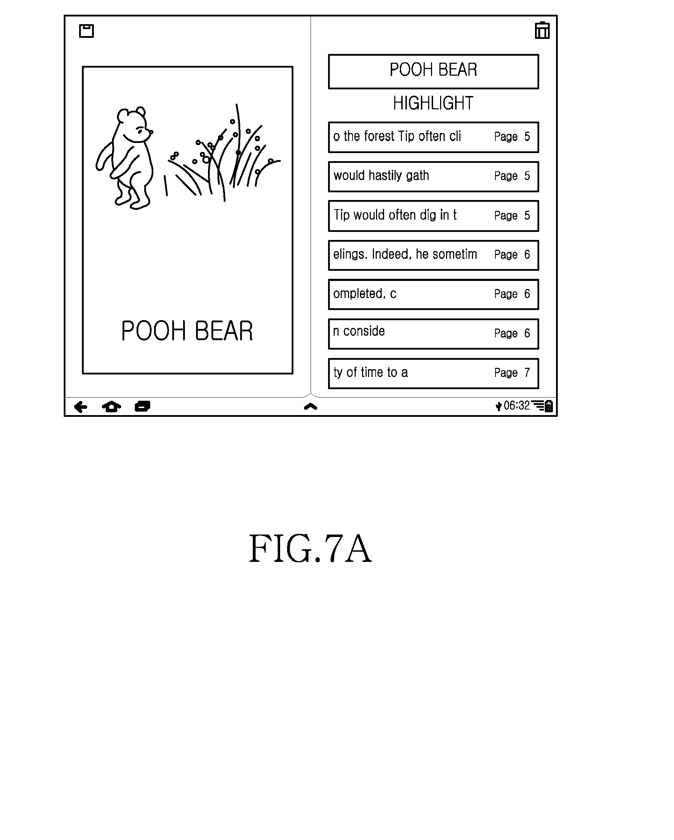

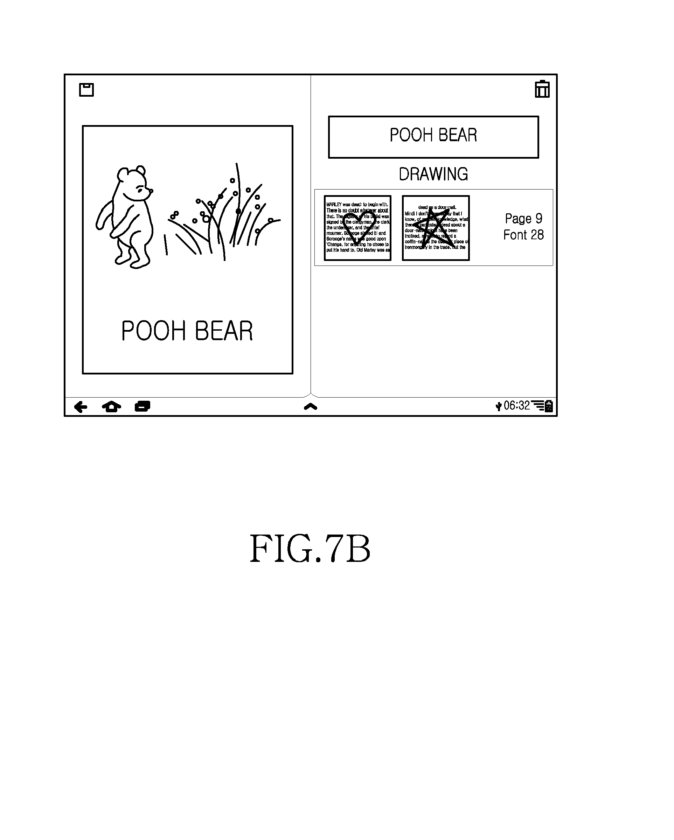

FIGs. 7A and 7B are diagrams illustrating a highlight list and a drawing list according to an exemplary embodiment of the present invention.

Referring to FIG. 7A, when the user stores a specific text, an image, and a moving image of electronic contents together with the electronic contents by using the highlight function, a highlight list of the relevant contents, to which the highlight function has been applied, can be displayed. The highlight list illustrated in FIG. 7A will be described as an example. It is assumed that the user stores specific contents by applying the highlight function while reading electronic contents "Pooh Bear" and reads the stored electronic contents again.

When selecting the electronic contents "Pooh Bear" and when the user desires to re-read only a highlight portion stored in the relevant contents, the user can select a highlight list and read only the stored highlight portion. From the viewpoint of the user, the electronic contents "Pooh Bear" selected by the user are displayed on a left side of FIG. 7A, and texts, to which the highlight function has been applied by the user, are displayed together with a relevant page on a right side thereof. For example, the user can find that three texts, to which the highlight function has been applied, have been stored in page 5 of the electronic contents "Pooh Bear". In addition, the user can find that two texts, to which the highlight function has been applied, have been stored in page 6, and one text, to which the highlight function has been applied, has been stored in page 7.

Referring to FIG. 7B, when the user stores a specific text and an image of electronic contents together with the electronic contents by using the highlight function, a drawing list of the relevant contents, to which the drawing function has been applied, can be displayed. The drawing list illustrated in FIG. 7B will be described as an example. It is assumed that the user stores specific contents by applying the drawing function while reading electronic contents "Pooh Bear" and reads the stored electronic contents again. When selecting the electronic contents "Pooh Bear" and when the user desires to re-read only a drawing portion stored in the relevant contents, the user can select a drawing list and read only the stored drawing portion. From the viewpoint of the user, the electronic contents "Pooh Bear" selected by the user are displayed on a left side of FIG. 7B, and texts, to which the drawing function has been applied by the user, are displayed together with a relevant page on a right side thereof. For example, the user can find that the drawing function (i.e., a heart mark) has been applied in page 9 of the electronic contents "Pooh Bear", and the drawing function (i.e., an asterisk mark) has also been applied in page 28.

Since the method of the related art does not provide a list that enables the user to visibly find the number of a page including a portion highlighted by the user and the relevant highlighted text, the user is inconvenienced by having to directly find the respective highlighted portions in the electronic contents one by one. However, as described above, exemplary embodiments of the present invention provide the highlight list and the drawing list that enable the user to easily find the relevant pages and the relevant marks.

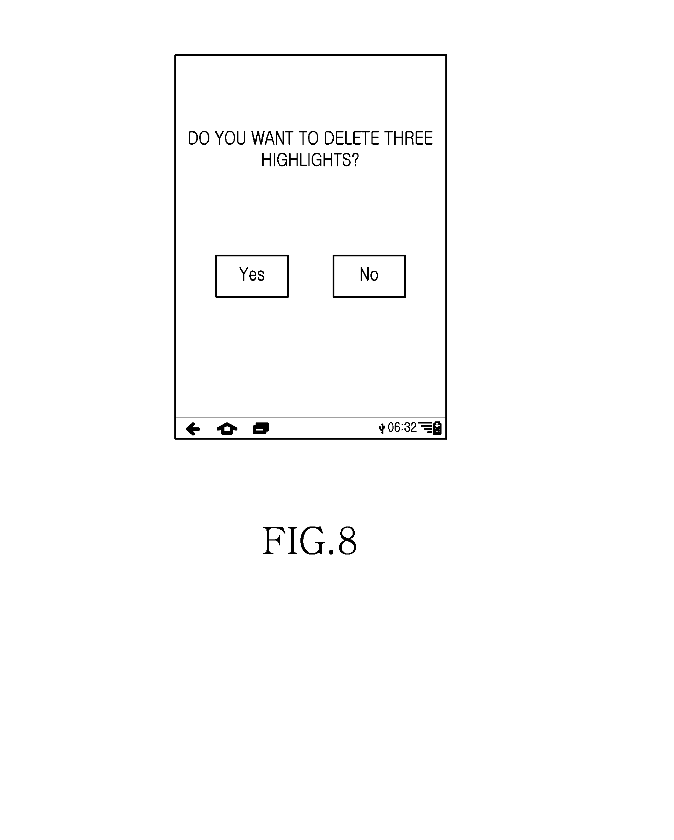

FIG. 8 is a diagram illustrating deletion of specific contents to which a highlight function has been applied by using a highlight list according to an exemplary embodiment of the present invention.

Referring to FIG. 8, the user selects specific electronic contents and calls a highlight list including highlight texts, which have been stored together with the selected electronic contents and to which the highlight function has been applied. When the user calls the highlight list, the texts to which the highlight function has been applied are displayed on the touchscreen of the electronic device. Thereafter, when the user selects a highlight list to be deleted and inputs an instruction for deleting the selected highlight list, a text to which the selected highlight function has been applied is deleted. The method of the related art does not provide a list that enables the user to visibly find highlighted texts.

Therefore, the user is inconvenienced by having to find and delete the highlighted texts one by one. However, exemplary embodiments of the present invention provide a highlight list including texts to which the highlight function has been applied. For example, the texts to which the highlight function has been applied can be previewed in the highlight list, and the page including the texts to which the highlight function has been applied is displayed simultaneously. Therefore, when calling the highlight list and displaying it on the touchscreen of the electronic device, the user can find each text to which the highlight function has been applied and the number of a page in which the text to which the highlight function has been applied is located, thus improving user convenience.

As described above, the user can select and delete only texts to be deleted from the highlight list, even without separately finding and deleting texts to be deleted. FIG. 8 illustrates an exemplary embodiment of conveniently deleting texts, to which the highlight function has been applied, from the highlight list. As illustrated in FIG. 8, the user conveniently selects and deletes three texts to be deleted from the highlight list, to which the highlight function has been applied. Although not illustrated in FIG. 8, the present exemplary embodiment may be similarly applied to the case where the text to which the drawing function has been applied is deleted from the drawing list, in addition to the example where the text to which the highlight function has been applied is deleted from the highlight list.

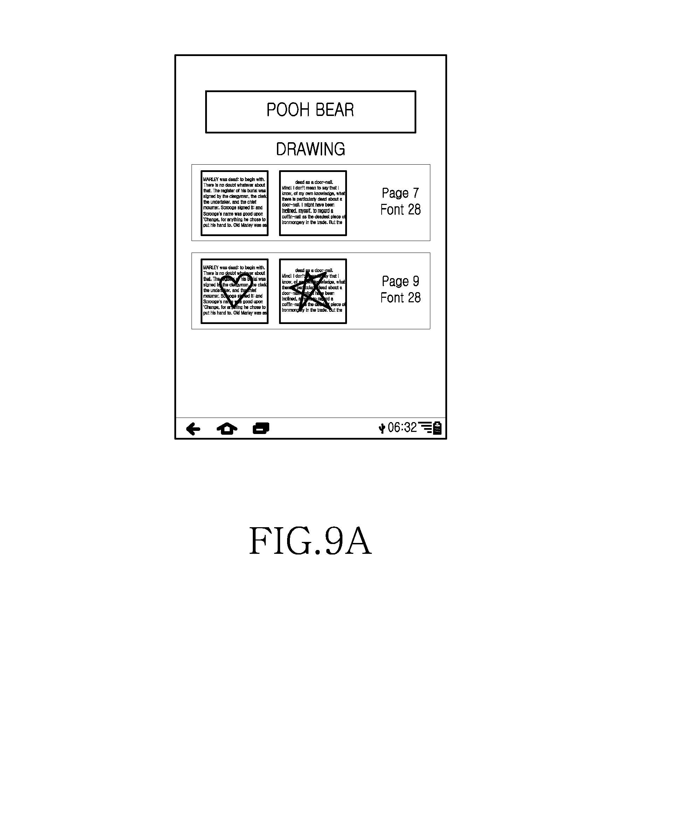

FIGs. 9A through 9D are diagrams illustrating restoring of a user-defined value for display when stored user data are called according to an exemplary embodiment of the present invention.

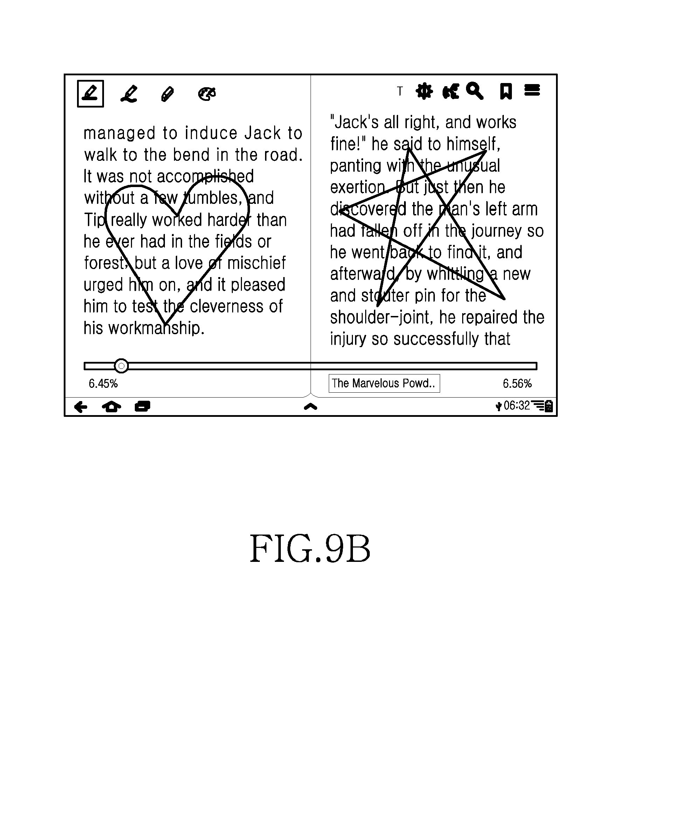

First, referring to FIG. 9A, after making a drawing mark at a specific page while reading specific electronic contents in the electronic device, the user calls and displays the electronic contents stored together with the drawing mark. For example, as illustrated in FIG. 9A, in a drawing list, a drawing mark is stored together with a relevant page to which the drawing function has been applied. Thereafter, when the user selects the relevant page to which the drawing function has been applied, the drawing mark is displayed together with the relevant page to which the drawing function has been applied, as illustrated in FIG. 9B. Instead of simply displaying the drawing mark together with the relevant page to which the drawing function has been applied, exemplary embodiments of the present invention restore a user-defined value stored for display.

More specifically, a font size and a page number stored together with the drawing mark are restored for display on the touchscreen of the electronic device. For example, when the user stores a text of page 9 together with a heart mark and an asterisk mark with a font size of 28 and calls the relevant text again, the text of page 9 is restored to a font size of 28 for display.

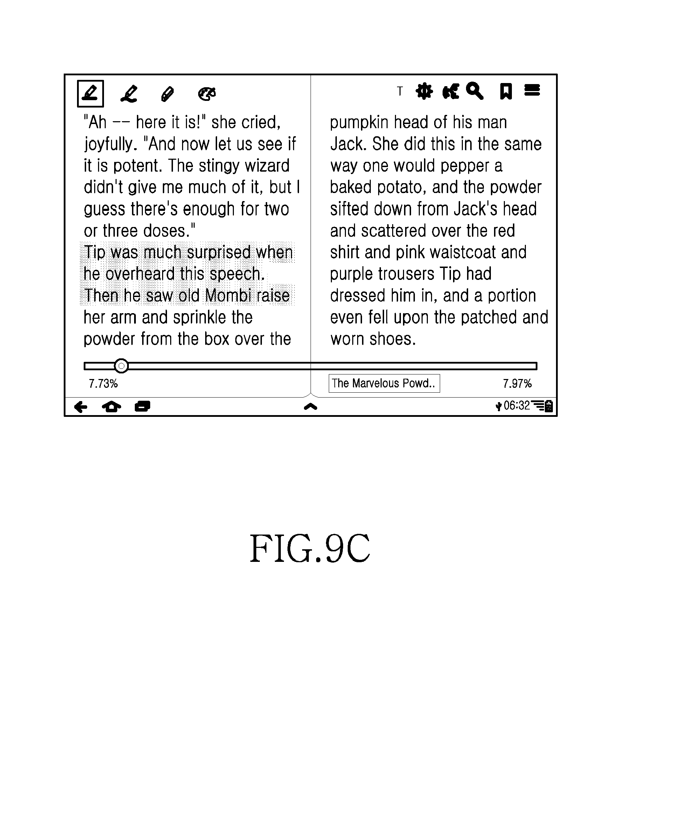

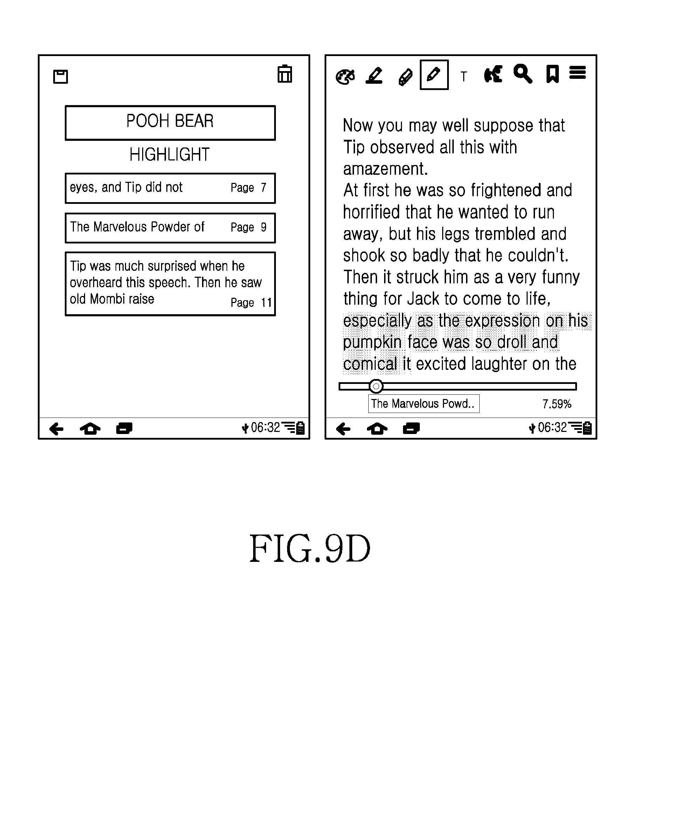

Referring to FIGs. 9C and 9D, they illustrate maintaining a current user-defined value, except for a storage page, and displaying a text to which the highlight function has been applied. As illustrated in FIG. 9C, while reading electronic contents, the user designates a specific text, applies the highlight function to the specific text, and stores the specific text together with the electronic contents. Thereafter, as illustrated in FIG. 9D, when the text to which the highlight function has been applied is called and displayed, only the page is moved for display in a current display mode of the electronic contents. More specifically, when the user calls and displays the text to which the highlight function has been applied, the text to which the highlight function has been applied is displayed in accordance with the current display mode regardless of the mode at the storage, thus improving user convenience. Therefore, as described with reference to FIGs. 9A and 9B, the user can restore and display the contents in the mode at the storage, and can display the contents in accordance with the current display mode, thus meeting a user's preferences.

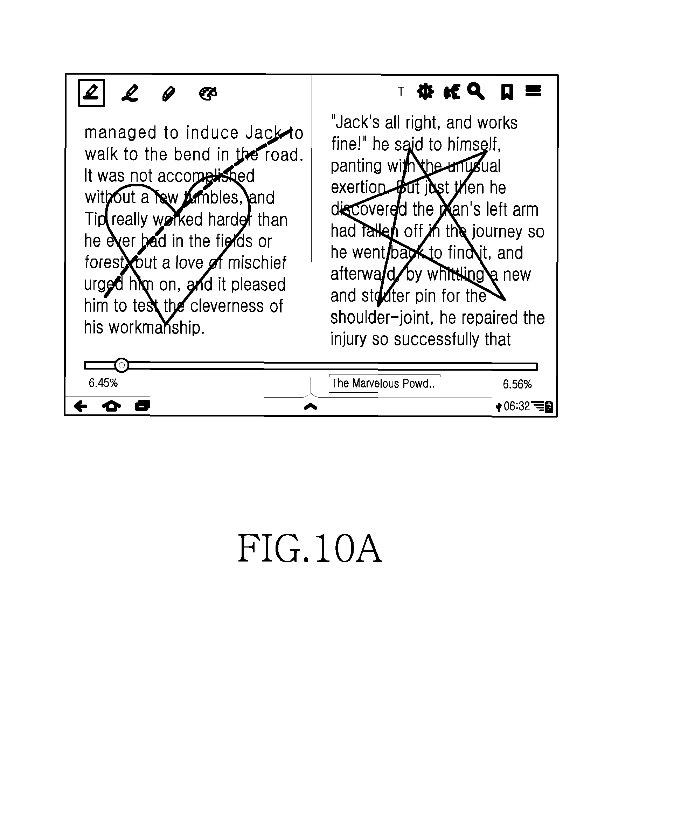

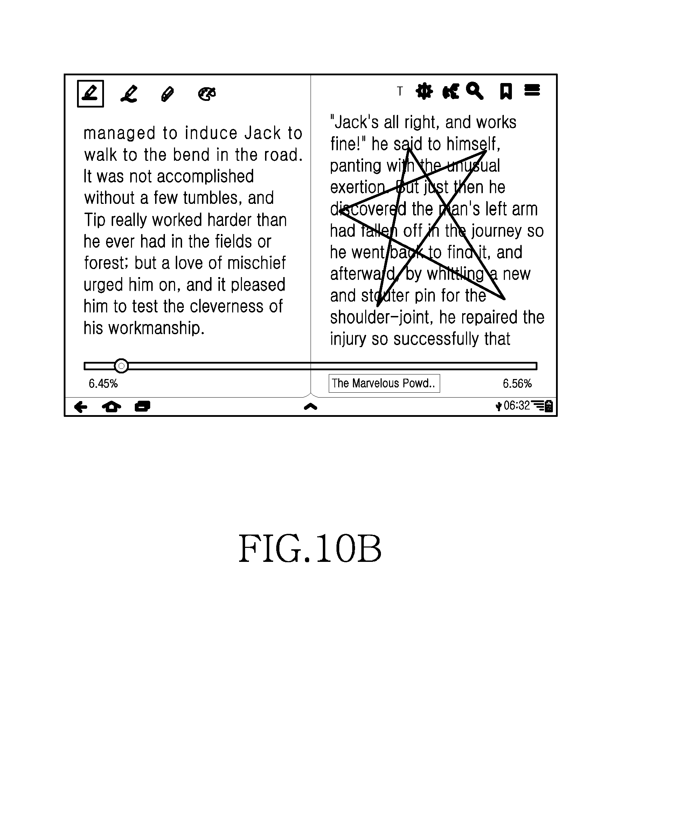

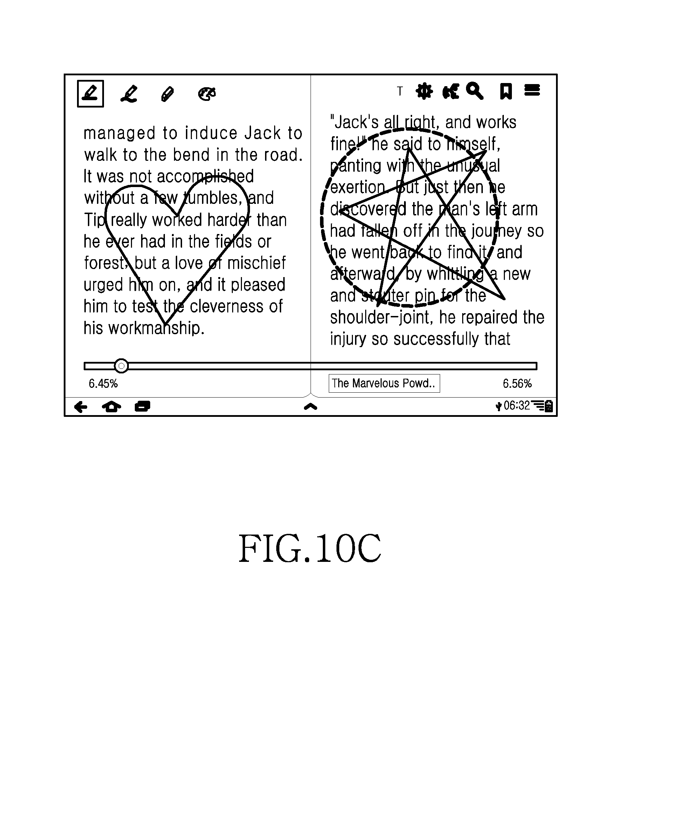

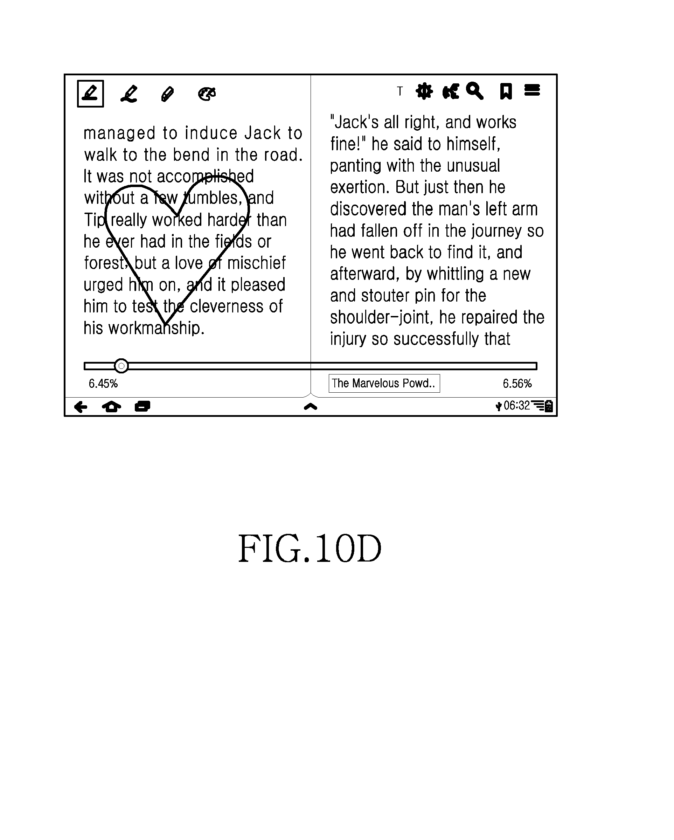

FIGs. 10A through 10D are diagrams illustrating deleting a stored drawing mark separately according to an exemplary embodiment of the present invention. As described with reference to FIG. 8, the text to be deleted, to which the highlight function or the drawing function has been applied, can be deleted from the highlight list or the drawing list. However, the stored drawing mark may also be deleted separately as will be described with reference to FIG. 10. Hereinafter, an exemplary embodiment of deleting the stored drawing mark separately will be described.

Referring to FIGs. 10A through 10D, it is assumed that, when a heart mark and an asterisk mark are stored in a page of electronic contents, the user desires to delete the stored heart mark. The user calls a page in which the heart mark has been stored, displays the page on the touchscreen of the electronic device, and selects a deletion icon. When the deletion icon is selected by the user, the electronic device converts into a deletion mode capable of deleting a specific mark. Thereafter, when the user selects the heart mark by crossing a portion of the heart mark to be deleted, the stored heart mark is deleted as illustrated in FIG. 10B.

As illustrated in FIG. 10C, it is assumed that, when a heart mark and an asterisk mark are stored in a page of electronic contents, the user desires to delete the stored asterisk mark. The user calls a page in which the asterisk mark has been stored, displays the page on the touchscreen of the electronic device, and selects a deletion icon. When the deletion icon is selected by the user, the electronic device converts into a deletion mode capable of deleting a specific mark. Thereafter, when the user selects the asterisk mark by covering the entire asterisk mark to be deleted, the stored asterisk mark is deleted as illustrated in FIG. 10D. Although FIGs. 10A through 10D illustrate deleting the stored drawing mark separately, the stored highlight mark may also be deleted separately in the same manner.

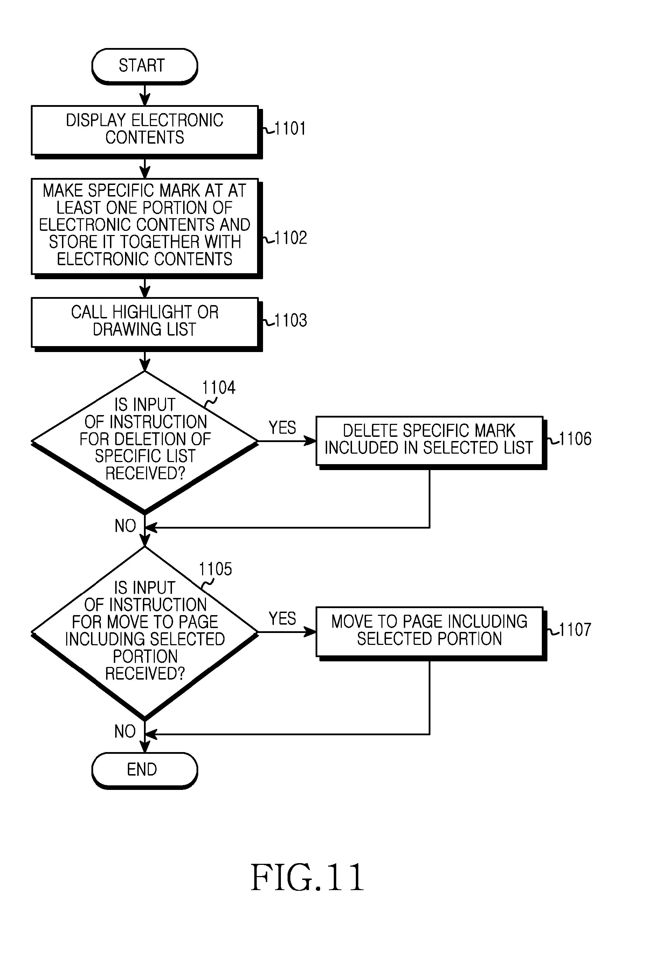

FIG. 11 is a flowchart illustrating an operation of an electronic device for inputting and managing user data according to an exemplary embodiment of the present invention.

Referring to FIG. 11, the electronic device displays electronic contents in step 1101. More specifically, when the user selects any one among at least one electronic contents stored in the electronic device, the electronic device displays the electronic contents selected by the user on the touchscreen of the electronic device.

After displaying the electronic contents, the electronic device makes a specific mark at at least one portion of the electronic contents and stores the specific mark together with the electronic contents in step 1102. More specifically, when the user makes at least one of a highlight mark and a drawing mark while reading the electronic contents displayed in the electronic device, the electronic device stores the specific mark together with the electronic contents. Herein, the highlight function is defined as a function of, when a specific text is selected by the user among texts of electronic contents displayed in the electronic device, highlighting the selected text by at least one of a color, a shade, an underline, a slope, a thickness, and the like, while receiving a selection of the specific text. More specifically, it is defined as a function of selecting and highlighting a desired specific text to be highlighted by the user while displaying and reading specific electronic contents in the electronic device.

For example, while reading educational electronic contents stored in the electronic device, when the user desires to re-read a portion of the electronic contents in a highlighted manner, the user can select and highlight the portion. Therefore, the user can re-read the highlighted portion in a focused manner without the need to re-read the entire electronic contents, thus making it possible to improve the user's learning efficiency. The drawing function is defined as a function of inputting at least one of a line, a figure, a picture, and a character to at least one of a text and an image of electronic contents displayed in the electronic device. More specifically, it is defined as a function of selecting and highlighting a desired specific text or an image by the user while displaying and reading specific electronic contents in the electronic device. For example, when finding a favorite text while reading a specific novel stored in the electronic device, the user can make a mark, such as an asterisk, at the favorite text and re-read only the marked text, thus making it possible to save the user's time.

Thereafter, the electronic device calls a highlight list or a drawing list in step 1103. More specifically, the user selects specific electronic contents, and calls a highlight list (or drawing list) including highlight texts (or drawing texts) stored together with the selected electronic contents, to which the highlight function (or drawing function) has been applied. When the user calls the highlight list (or drawing list), the highlight list (or drawing list) including highlight texts (or drawing texts) to which the highlight function (or drawing function) has been applied is displayed on the touchscreen of the electronic device.

After calling the highlight list or the drawing list, the electronic device determines whether an input of an instruction for deleting a specific list is received in step 1104. More specifically, as described above, texts to which the highlight function or the drawing function has been applied are displayed in the highlight list or the drawing list. In exemplary embodiments of the present invention, when the user selects the highlight list (or drawing list) to be deleted, and inputs an instruction for deleting the selected highlight list (or drawing list) to the electronic device, the texts to which the selected highlight function (or drawing function) has been applied are deleted. The method of the related art does not provide a list that enables the user to visibly find highlighted texts. Therefore, the user is inconvenienced by having to find and delete the highlighted texts one by one. However, exemplary embodiments of the present invention provide the highlight list (or drawing list) including the texts to which the highlight function (or drawing function) has been applied. Therefore, as described above, the user can select and delete only the texts to be deleted from the highlight list (or drawing list), even without separately finding and deleting the texts to be deleted.

When determining that the input of the instruction for deleting the specific list is not received, the electronic device determines whether an input of an instruction for moving to a page including the selected portion is received in step 1105. More specifically, exemplary embodiments of the present invention provide a shortcut function for, when any one of the highlight list (or drawing list) displayed on the touchscreen of the electronic device is selected, moving to a page including the selected portion. For example, when the user selects and inputs any one of items displayed in the highlight list (or drawing list), a shortcut function for directly moving to a page including the relevant item is provided, thus improving user convenience.

When determining that the input of the instruction for moving to the page including the selected portion is not received, the electronic device ends the operation of the exemplary embodiment of present invention. Herein, the meaning of "ends" may also include the meaning of continuing to read the electronic contents. For example, the reading of the electronic contents may be stopped immediately, or the reading of the electronic contents may be continued without applying the deletion or shortcut function of exemplary embodiments of the present invention.

When determining in step 1104 that the input of the instruction for deleting the specific list is received, the electronic device deletes a specific mark included in the selected list in step 1106. For example, as described above, exemplary embodiments of the present invention provide a function for deleting a relevant text when the user selects the text to be deleted after the highlight list or the drawing list is displayed on the touchscreen of the electronic device.

When determining in step 1105 that the input of the instruction for moving to the page including the selected portion is received, the electronic device directly moves to the page including the selected portion in step 1107, and ends the operation of the exemplary embodiment of the present invention.

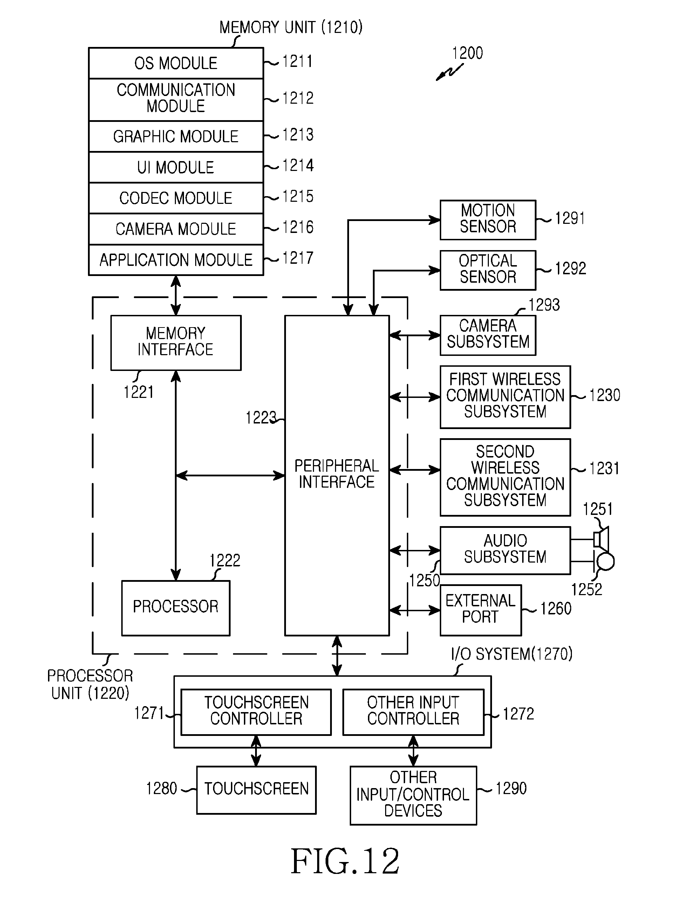

FIG. 12 is a block diagram illustrating a configuration of an electronic device according to an exemplary embodiment of the present invention.

Referring to FIG. 12, an electronic device 1200 may be a portable electronic device, and examples of which may include portable terminals, mobile phones, mobile pads, media players, tablet computers, handheld computers, Personal Digital Assistants (PDAs), and the like. The electronic device 300 may be any portable electronic device including a combination of two or more functions of the above-mentioned devices.

The electronic device 1200 includes a memory unit 1210, a processor unit 1220, a first wireless communication subsystem 1230, a second wireless communication subsystem 1231, an external port 1260, an audio subsystem 1250, a speaker 1251, a microphone 1252, an Input/Output (I/O) system 1270, a touchscreen 1280, and other input/control devices 1290. The memory unit 1210 and the external port 1260 may be provided in plurality.

The processor unit 1220 may include a memory interface 1221, at least one processor 1222, and a peripheral interface 1223. In some cases, the processor unit 1220 will also be referred to as a processor. In exemplary embodiments of the present invention, the processor unit 1220 highlights a selected first text by at least one of a color, a shade, an underline, a slope, a thickness, and the like, while receiving the selection of the first text, highlights a selected second text by at least one of a color, a shade, an underline, a slope, a thickness, and the like, while receiving the selection of the second text, and connects the first text and the second text. The processor unit 1220 detects that a portion of the highlighted first text is dragged to a third text and a fourth text, detects that the first text is divided into the third text and the fourth text, highlights a border of a selected image, highlights a border of a video player including a selected moving image, extracts a selected section, and analyzes input coordinates. In addition, the processor unit 1220 deletes at least one highlighted text receiving the input of the instruction, moving to the page including the highlighted text, and deletes at least one portion receiving the input of the instruction. Moreover, the processor unit 1220 moves to the page including the selected portion.

The processor 1222 executes various software programs to perform various functions for the electronic device 1200, and performs processes and controls for voice communication and data communication. In addition to these general functions, the processor 1222 executes a software module (i.e., an instruction set) stored in the memory unit 1210 and performs various functions corresponding to the software module. For example, the processor 1222 performs the exemplary methods of the present invention in cooperation with software modules stored in the memory unit 1210.

The processor 1222 may include at least one data processor, an image processor, a codec, or the like. The data processor, the image processor, or the codec may be configured separately. In addition, the processor 1222 may be configured by a plurality of processors performing different functions. The peripheral interface 1223 connects various peripheral devices and the I/O system 1270 of the electronic device 1200 to the processor 1222 and the memory unit 1210 (through the memory interface 1221).

The various elements of the electronic device 1200 may be coupled by at least one communication bus (not illustrated) or a stream line (not illustrated).

The external port 1260 is used to connect a portable electronic device (not illustrated) to other electronic devices directly or indirectly through a network (for example, the Internet, an intranet, or a wireless Local Area Network (LAN)). The external port 1260 may be, for example, a Universal Serial Bus (USB) port or a FireWire port, but is not limited thereto.

A motion sensor 1291 and an optical sensor 1292 may be connected to the peripheral interface 1223 to perform various functions. For example, the motion sensor 1291 and the optical sensor 1292 may be connected to the peripheral interface 1223 to detect a motion of the electronic device and detect light from the outside. In addition, other sensors, such as a positioning system, a temperature sensor, and a biosensor may be connected to the peripheral interface 1223 to perform relevant functions.

A camera subsystem 1293 may perform camera functions, such as photographing and video clip recording.

The optical sensor 1292 may include a Charged Coupled Device (CCD) or a Complementary Metal-Oxide Semiconductor (CMOS) device.

A communication function is performed through one or more wireless communication subsystems 1230 and 1231. The wireless communication subsystems 1230 and 1231 may include a Radio Frequency (RF) receiver and transceiver and/or an optical (e.g., an infrared) receiver and transceiver. The first wireless communication subsystem 1230 and the second wireless communication subsystem 1231 may be divided according to communication networks through which the electronic device 1200 communicates. For example, the electronic device 1200 may include, but not limited to, communication subsystems operated through a Global System for Mobile communication (GSM) network, an Enhanced Data GSM Environment (EDGE) network, a Code Division Multiple Access (CDMA) network, a W-Code Division Multiple Access (W-CDMA) network, a Long Term Evolution (LTE) network, an Orthogonal Frequency Division Multiple Access (OFDMA) network, a Wireless Fidelity (WiFi) network, a WiMax network, and/or a Bluetooth network. Since exemplary embodiments of the present invention require a WiFi communication through a WiFi network, one of the first wireless communication subsystem 1230 and the second wireless communication subsystem 1231 may operate through the WiFi network in FIG. 12. The first wireless communication subsystem 1230 and the second wireless communication subsystem 1231 may be integrated into one wireless communication subsystem.

The audio subsystem 1250 is connected to the speaker 1251 and the microphone 1252 to perform audio stream input/output functions, such as voice recognition, voice replication, digital recording, and phone functions. For example, the audio subsystem 1250 communicates with the user through the speaker 1251 and the microphone 1252. The audio subsystem 1250 receives a data stream through the peripheral interface 1220 of the processor unit 1223 and converts the received data stream into an electric stream. The electric stream is transmitted to the speaker 1251 which converts the electric stream into sound waves audible by humans and outputs the same. The microphone 1252 converts sound waves received from humans or other sound sources into an electric stream. The audio subsystem 1250 receives an electric stream converted from the microphone 1252. The audio subsystem 1250 converts the received electric stream into an audio data stream and transmits the audio data stream to the peripheral interface 1223. The audio subsystem 1250 may include an attachable/detachable earphone, a headphone, a headset, and the like.

The I/O system 1270 may include a touchscreen controller 1271 and/or another input controller 1272. The touchscreen controller 1271 may be connected to the touchscreen 1280. For example, the touchscreen 1280 and the touchscreen controller 1271 may detect a touch, a motion, or a stop thereof by using multi-touch detection technologies including a proximity sensor array or other elements, as well as capacitive, resistive, infrared and surface acoustic wave technologies for determining one or more touch points with the touchscreen 1280. The other input controller 1272 may be connected to the other input/control devices 1290 which may include one or more buttons, a rocker switch, a thumb wheel, a dial, a stick, and/or a pointer device, such as a stylus.

The touchscreen 1280 provides an I/O interface between the electronic device 1200 and the user. For example, the touchscreen 1280 transmits a user touch input to the electronic device 1200. In addition, the touchscreen 1280 is a medium that displays an output from the electronic device 1200 to the user. For example, the touchscreen 1280 displays a visual output to the user. The visual output may be represented by a text, a graphic, a video, or a combination thereof.

The touchscreen 1280 may use various display technologies. For example, the touchscreen 1280 may use a Liquid Crystal Display (LCD), a Light Emitting Diode (LED), a Light emitting Polymer Display (LPD), an Organic Light Emitting Diode (OLED), an Active Matrix Organic Light Emitting Diode (AMOLED), or a Flexible LED (FLED). In an exemplary embodiment of the present invention, the touchscreen 1280 receives a selection of a specific image among images of the electronic contents, receives a selection of a specific moving image among moving images of the electronic contents, and receives an input of at least one of a line, a figure, a picture, and a character to at least one of a text and an image of the electronic contents. The touchscreen 1280 also receives an input of an instruction for calling the highlight list, displays the highlight list, receives a selection of at least one highlighted text displayed in the highlight list, and receives an input of an instruction for deleting the at least one highlighted text selected. In addition, the touchscreen 1280 receives a selection of at least one highlighted text displayed in the highlight list, and receives an input of an instruction for moving the page including the selected highlighted text. Moreover, the touchscreen 1280 receives an input of an instruction for calling a drawing list, and displays the drawing list. Furthermore, the touchscreen 1280 receives a selection of at least one portion of a text and an image of the electronic contents with at least one of a line, a figure, a picture, and a character input, which is displayed in the drawing list, receives an input of an instruction for deleting the at least one portion, receives a selection of at least one portion of a text and an image of the electronic contents with at least one of a line, a figure, a picture, and a character input, which is displayed in the drawing list, and receives an input of an instruction for moving to the page including the selected portion.

The memory 1210 may be connected to the memory interface 1221. The memory unit 1210 may include one or more high-speed Random-Access Memories (RAMs), such as magnetic disk storage devices, one more nonvolatile memories, one or more optical storage devices, and/or one or more flash memories (for example, NAND flash memories or NOR flash memories).

The memory unit 1210 stores software. Elements of the software include an Operation System (OS) module 1211, a communication module 1212, a graphic module 1213, a User Interface (UI) module 1214, a codec module 1215, a camera module 1216, and one or more application modules 1217. Since the module that is an element of the software may be represented as a set of instructions, the module may be referred to as an instruction set. The module may also be referred to as a program. In an exemplary embodiment of the present invention, the memory unit 1210 stores at least one input mark together with electronic contents, stores a moving image of an extracted section, generates a highlight list by storing an input highlight mark together with the electronic contents, calls the stored highlight list, and calls the stored drawing list. The OS module 1211 (for example, WINDOWS, LINUX, Darwin, RTXC, UNIX, OS X, or an embedded OS, such as VxWorks) includes various software elements for controlling general system operations. For example, general system operation controls include memory control/management, storage hardware (device) control/management, and power control/management. The OS module 1211 also performs a function for enabling smooth communication between various hardware elements (i.e., devices) and software elements (i.e., modules).

The communication module 1212 may enable communication with other electronic devices (such as computers, servers, and/or portable terminals) through the wireless communication subsystems 1230 and 1231 or the external port 1260.

The graphic module 1213 includes various software elements for providing and displaying graphics on the touchscreen 1280. The graphics may include texts, web pages, icons, digital images, videos, animations, and the like. In an exemplary embodiment of the present invention, the touchscreen 1280 displays a message about whether a smart rotation function is set, and receives a selection of a region included in the message.

The UI module 1214 includes various software elements related to a user interface. Specifically, the UI module 1214 includes information about how the state of a user interface changes and/or information about under what condition the state of a user interface changes.

The codec module 1215 may include software elements related to video file encoding/decoding. The codec module 1215 may include a video stream module, such as a Motion Pictures Expert Group (MPEG) module or an H204 module. In addition, the codec module 1215 may include various audio file codec modules, such as AAA, an Adaptive Multi-Rate audio (AMR), and a Windows Media Audio (WMA). Moreover, the codec module 1215 includes an instruction set corresponding to exemplary methods of the present invention.

The camera module 1216 may include camera-related software elements that enable camera-related processes and functions.

The application module 1217 includes a browser application, an e-mail application, an instant message application, a word processing application, a keyboard emulation application, an address book application, a touch list application, a widget application, a Digital Right Management (DRM) application, a voice recognition application, a voice replication application, a position determining function application, a Location-Based Service (LBS) application, and the like.

In addition, various functions of the electronic device 1200 according to exemplary embodiments of the present invention may be implemented by any combination of hardware and/or software including one or more stream processings and/or an Application-Specific Integrated Circuit (ASIC).

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for operating an electronic device, the method comprising:
receiving an input of at least one of a highlight mark and a drawing mark to at least one portion of electronic contents; and
storing information on the at least one input mark together with the electronic contents,
wherein the information on the input mark is used for displaying the portion of electronic contents to which the input mark has been applied.

2. The method of claim 1, further comprising:
receiving a selection of at least one stored electronic contents;
receiving an input of an instruction for executing the selected electronic contents; and
displaying the electronic contents executed upon receiving the input of the instruction.

3. The method of claim 1, wherein the receiving of the input of the highlight mark comprises:
receiving a selection of a specific text among texts of the electronic contents; and
highlighting the selected text by at least one of a color, a shade, an underline, a slope, and a thickness while receiving the selection of the specific text.

4. The method of claim 3, further comprising:
receiving a selection of a second text unhighlighted starting from an end of a first text highlighted;
highlighting the selected second text by at least one of a color, a shade, an underline, a slope, and a thickness while receiving the selection of the second text; and
connecting the first text and the second text.

5. The method of claim 3, further comprising:
detecting that a portion of the highlighted first text is dragged to a third text and a fourth text; and
detecting that the first text is divided into the third text and the fourth text.

6. The method of claim 1, wherein the receiving of the input of the highlight mark comprises:
receiving a selection of a specific image among images of the electronic contents; and
highlighting a border of the selected image.

7. The method of claim 1, wherein the receiving of the input of the highlight mark comprises:
receiving a selection of a specific moving image among moving images of the electronic contents; and
highlighting a border of a video player including the selected moving image.

8. The method of claim 7, wherein the highlighting of the border of the video player including the selected moving image comprises:
displaying the selected moving image;
receiving a selection of a section of the displayed moving image;
extracting the selected section; and
storing the extracted section of the moving image.

9. The method of claim 1, wherein the receiving of the input of the drawing mark comprises receiving an input of at least one of a line, a figure, a picture, and a character to at least one of a text and an image of the electronic contents.

10. The method of claim 1, further comprising:
generating a highlight list by storing the input highlight mark together with the electronic contents;
receiving an input of an instruction for calling the highlight list;
calling the stored highlight list; and
displaying the highlight list.

11. The method of claim 11, further comprising:
receiving a selection of at least one highlighted text displayed in the highlight list;
receiving an input of an instruction for deleting the at least one selected highlighted text; and
deleting the at least one highlighted text receiving the input of the instruction.

12. The method of claim 11, further comprising:
receiving a selection of any highlighted text displayed in the highlight list;
receiving an input of an instruction for moving to a page including the selected highlighted text; and
moving to the page including the highlighted text.

13. The method of claim 1, further comprising:
generating a drawing list by storing the input drawing mark together with the electronic contents;
receiving an input of an instruction for calling the drawing list;
calling the stored drawing list; and
displaying the drawing list.

14. The method of claim 14, further comprising:
receiving a selection of at least one portion of a text and an image of the electronic contents with at least one of a line, a figure, a picture, and a character input, which is displayed in the drawing list;
receiving an input of an instruction for deleting the at least one portion; and
deleting the at least one portion receiving the input of the instruction.

15. An electronic device, comprising:
one or more processors;
memory; and
one or more programs, wherein the one or more programs are stored in the memory and configured to cause, when executed by the electronic device, the electronic device to perform the method of any of claims 1 to 14.
